# EUROPÄISCHE PATENTSCHRIFT

(11) **EP 2 514 271 B1**
(45) Veröffentlichungstag und Bekanntmachung des Hinweises auf die Patenterteilung: **13.03.2019**
(21) Anmeldenummer: 10795305.1
(22) Anmeldetag: 15.12.2010
(51) Int. Cl.: H05B 33/08

(54) **VERFAHREN UND BETRIEBSSCHALTUNG ZUM BETREIBEN EINES ELEKTRISCHEN LEUCHTMITTELS**
METHOD AND CIRCUIT FOR OPERATING AN ELECTRIC LUMINOUS ELEMENT
PROCÉDÉ ET CIRCUIT POUR FAIRE FONCTIONNER UN 'ÉCLAIRAGE ÉLECTRIQUE

(30) Priorität: 18.12.2009 DE 102009054993; 20.01.2010 DE 102010001048
(43) Veröffentlichungstag der Anmeldung: 24.10.2012
(73) Patentinhaber: Tridonic GmbH & Co KG, 6851 Dornbirn (AT)
(72) Erfinder: FINK, Jürgen, A-6911 Lochau (AT)
(74) Vertreter: Rupp, Christian
(86) Internationale Anmeldenummer: PCT/EP2010/069698
(87) Internationale Veröffentlichungsnummer: WO 2011/073228

(56) Entgegenhaltungen:
- EP-A1- 0 746 186
- EP-A1- 1 185 149
- DE-A1- 19 705 776
- DE-A1- 19 715 253
- DE-A1- 19 715 254
- DE-A1-102007 017 581
- GB-A- 1 204 682
- JP-A- 2009 177 949
- RU-C2- 2 180 464
- US-A1- 2009 322 302

## Beschreibung

Die Erfindung betrifft ein Verfahren zum Betreiben eines Leuchtmittels, bei dem wenigstens ein Leuchtmittel von einer Gleichspannungsquelle unter Zwischenschaltung eines Konverters mit elektrischer Betriebsenergie versorgt wird.

Obwohl die Erfindung, was das Leuchtmittel betrifft, von allgemeiner Bedeutung ist, ist hier insbesondere der Betrieb von Leuchtdioden (LEDs, OLEDs) von Interesse, die mit elektrischer Energie aus dem Wechselstromnetz betrieben werden sollen.

Es ist bekannt, dass die effektivste Art zum Betreiben von mehreren LEDs die ist, eine größere Zahl von ihnen durch Parallel- und Serienschaltung zu einem LED-Modul zusammenzuschalten, der von einer möglichst konstanten Gleichstromquelle gespeist wird. Um aus der Netzwechselspannung mit 220 V einen möglichst konstanten Gleichstrom zu erzeugen, wird die Netzwechselspannung zunächst gleichgerichtet. Durch die Gleichrichtung erhält man eine pulsierende Gleichspannung mit einem Spannungsspitzenwerten, die auch etwa bei 220 V liegen. Die pulsierende Gleichspannung wird dann mittels eines Spannungswandlers in eine Gleichspannung mit einem niedrigeren Spannungswert von etwa 12 V oder 24 V konvertiert. Der Spannungswandler kann beispielsweise ein Schaltregler sein, der an seinem Ausgang eine weitgehend (mittels eines Speicherkondensators) geglättete Gleichspannung zur Verfügung stellt. Ein typischer Schaltregler ist beispielsweise ein Flyback-Konverter oder ein Tiefsetzsteller. Auf diese Weise erhält man also eine Gleichspannungsquelle, deren herabgesetzte Gleichspannung zum Betreiben eines Zwischenmoduls oder Konverters geeignet ist, welcher an seinem Ausgang den notwendigen konstanten Gleichstrom zu Betreiben eines LED-Moduls zur Verfügung stellt. Der letztgenannte Konverter stellt sich also - von der Seite des LED-Moduls aus gesehen - als Stromquelle dar.

Nun geht die Entwicklung der LEDs immer mehr in Richtung von Leistungs-LEDs mit der Folge, dass die LED-Module ebenfalls als "high power" LED-Module (LED-Module mit hoher Leistung) betrachtet werden müssen. Zum Betrieb von derartigen high power LED-Modulen müssen naturgemäß entsprechende Leuchtmittel-Konverter zur Verfügung gestellt werden, die auch einen entsprechend hohen konstanten Gleichstrom zur Verfügung stellen können. Derartige Leuchtmittel-Konverter sind ebenfalls entwickelt worden.

Nun möchte man allerdings die neu entwickelten Leuchtmittel-Konverter mit den von ihnen gespeisten high power LED-Modulen mit den herkömmlichen Gleichspannungsquellen betreiben. Dies ist jedoch nicht ohne weiteres möglich, da die Leuchtmittel-Konverter eine wesentlich höhere Eingangskapazität aufweisen als die herkömmlichen zum Betrieb von low power LED-Modulen (LED-Module mit niedrigerer Leistung) entwickelten Konverter. Ein hohe Eingangskapazität hat beim Einschalten der Baustufen zur Folge, dass ein hoher Einschaltstrom ("Inrush Current") beim Laden der Eingangskapazität auftritt, der eine üblicherweise vorgesehene Überstrom-Schutzschaltung zum Abschalten des Systems veranlasst, weil hier das gleiche Phänomen auftritt, wie bei einem unerwünschten Kurzschluss.

Eine Überstrom-Schutzschaltung arbeitet gewöhnlich so, dass der von dem Konverter aufgenommene Strom gemessen und mit einem oberen Grenzwert verglichen wird, und dass die Gleichspannungsquelle von dem Konverter getrennt oder abgeschaltet wird, wenn der von dem Konverter aufgenommene Strom den oberen Grenzwert überschreitet.

GB 1 204 682 A offenbart Verbesserungen in Bezug auf elektrische Wechselrichtervorrichtungen.

EP 0 746 186 A1 offenbart eine Steuervorrichtung für ein Beleuchtungssystem einer Entladungslampe, die in verschiedenen Arten von Fahrzeugen verwendet wird.

DE 10 2007 017581 A1 offenbart ein Steuerverfahren für ein kühlleitendes elektrisches Lastelement.

RU 2 180 464 C2 offenbart eine Energiequelle mit Überlastungsschutz.

Der Erfindung liegt nun die Aufgabe zugrunde, das eingangs beschriebene Verfahren dahingehend zu modifizieren, dass das System einen durch den Leuchtmittel-Konverter, insbesondere LED-Konverter beim Einschalten verursachten Überstrom von einem Kurzschluss unterscheiden kann und nur im Kurzschluss-Fall ein Abschalten bewirkt.

Diese Aufgabe wird dadurch gelöst, dass das Verbringen in den Überstrom-Schutzmodus während einer festen oder adaptiv festgelegten Zeitdauer der Einschaltphase anders geregelt bzw. gesteuert wird als während der Betriebsphase, wobei ferner die Gleichspannung wiederholt an zwei aufeinander folgenden Mess-Zeitpunkten gemessen wird und die beiden Messwerte miteinander verglichen werden, und der Überstrom-Schutzmodus nicht aktiviert wird, solange der Spannungs-Messwert zu dem jeweils zweiten Messzeitpunkt größer ist als der Spannungs-Messwert zu dem jeweils ersten Messzeitpunkt.

Erfindungsgemäß wird ein Verfahren zum Betreiben eines Leuchtmittels, insbesondere LED oder OLED, vorgeschlagen, bei dem das Leuchtmittel ausgehend von einer Gleichspannung unter Zwischenschaltung eines Konverters mit elektrischer Betriebsenergie versorgt wird,
bei dem der von dem Konverter aufgenommene Strom gemessen und mit einem Grenzwert verglichen wird,
bei ein Überstrom-Schutzmodus aktiviert wird, bspw. indem die Spannungsversorgung des Konverters getrennt oder abgeschaltet wird, wenn der von dem Konverter aufgenommene Strom den Grenzwert überschreitet,
wobei die Aktivierung des Überstrom-Schutzmodus während einer festen oder adaptiv festgelegten Zeitdauer der Einschaltphase anders geregelt bzw. gesteuert wird als während einer folgenden Betriebsphase,
dadurch gekennzeichnet,
dass ferner die Gleichspannung wiederholt an zwei aufeinander folgenden Mess-Zeitpunkten gemessen wird und die beiden Messwerte miteinander verglichen werden, und der Überstrom-Schutzmodus nicht aktiviert wird, solange der Spannungs-Messwert zu dem jeweils zweiten Messzeitpunkt größer ist als der Spannungs-Messwert zu dem jeweils ersten Messzeitpunkt.

Bei einem Lösungsvorschlag wird die Einschaltphase bspw. so lange dimensioniert, dass der zunächst hohe überschwingende Einschaltstrom bis zu ihrem Ende soweit abgeklungen ist, dass er dann unterhalb des (oberen) Grenzwertes liegt und keine Abschaltung mehr provozieren kann. Bei einem Kurzschluss in dem Leuchtmittel-Konverter würde der von diesem aufgenommene Strom auch nach den Ende der Einschaltphase über dem oberen Grenzwert liegen und damit zu einer Trennung der Gleichspannungsquelle von dem Leuchtmittel-Konverter bzw. zu einem Abschalten der von seiner Stromversorgung führen.

Bei dem erfindungsgemäßen Verfahren wird außerdem ausgenutzt, dass die Ladespannung der Eingangskapazität des Leuchtmittel-Konverters während der Einschaltphase weitgehend linear ansteigt um dann in einen konstanten Spannungswert überzugehen. Im Fall eines Kurzschlusses würde am Eingang des Leuchtmittel-Konverters die Eingangsspannung praktisch bei Null bleiben und keine Steigung zeigen.

Eine weitere Ausgestaltung besteht darin, dass der Grenzwert für den von dem Leuchtmittel-Konverter aufgenommenen Strom während einer Einschaltphase erhöht und danach wieder abgesenkt wird.

Bei dem zweiten Lösungsvorschlag wird der obere Grenzwert während der Einschaltphase soweit angehoben, dass die Spitze des von dem Leuchtmittel-Konverter verursachten Überstroms sicher darunter liegt, während ein Kurzschluss-Strom darüber liegt und bereits währen der Einschaltphase zu einer System-Abschaltung führt. Die Erfindung betrifft ferner eine Betriebsschaltung für ein Leuchtmittel, vorzugsweise für ein LED-Modul, wie im Anspruch 8 definiert.

Ausführungsbeispiele der Erfindungen werden nachfolgend anhand der Zeichnungen beschrieben werden.

Es zeigen:
**Figur 1** eine erste Ausführungsform eines schematisierten Blockschaltbildes für eine Betriebsschaltung zum Betreiben eines LED-Moduls;
**Figur 2** eine Darstellung des zeitlichen Verlaufs des Einschaltstromes bei der Betriebsschaltung nach **Figur 1** und wie diese den Abschaltmechanismus während der Einschaltphase deaktiviert;
**Figur 3** eine zweite Ausführungsform eines schematisierten Blockschaltbildes für eine Betriebsschaltung zum Betreiben eines LED-Moduls;
**Figur 4** eine Darstellung des zeitlichen Verlaufs des Einschaltstromes bei der Betriebsschaltung nach **Figur 3** und wie diese den Abschaltmechanismus während der Einschaltphase modifiziert;
**Figur 5** eine dritte Ausführungsform eines schematisierten Blockschaltbildes für eine Betriebsschaltung zum Betreiben eines LED-Moduls;
**Figur 6** eine Darstellung des zeitlichen Verlaufs des Einschaltstromes bei der Betriebsschaltung nach **Figur 5** und wie diese den Abschaltmechanismus während der Einschaltphase modifiziert.

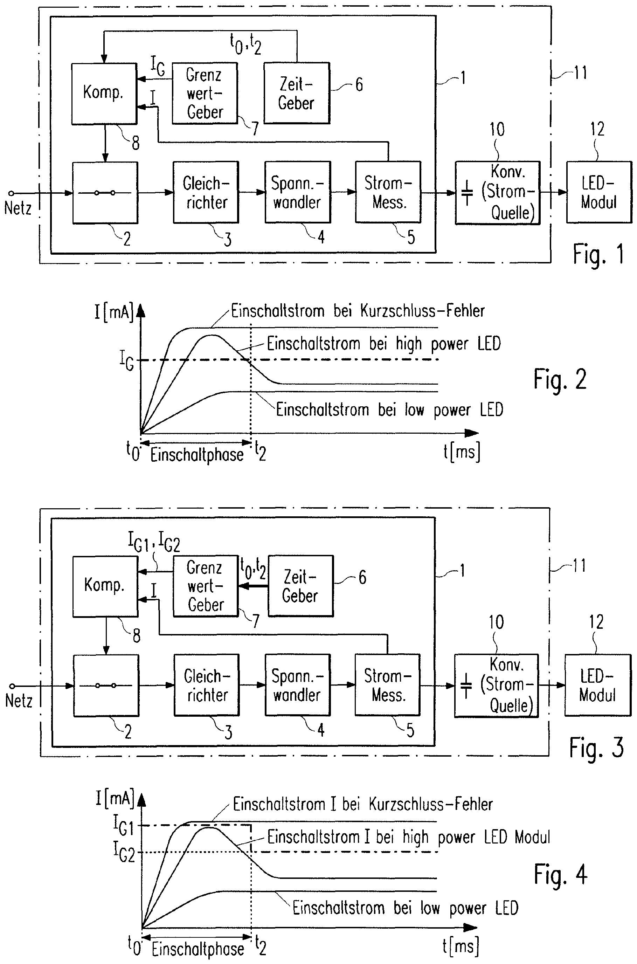

**Figur 1** zeigt eine Betriebsschaltung 11, die an das Wechselspannungsnetz angeschlossen ist und ein LED-Modul 12 mit einem konstanten Gleichstrom versorgt.

Die Betriebsschaltung 11 besteht aus einer vom Wechselstromnetz mit ggf. gleichgerichteter Wechselspannung versorgten Gleichspannungsquelle 1 (erste Konverter-Stufe), die an ihrem Ausgang eine konstante Gleichspannung mit etwa 12 bis 24 V zur Verfügung stellt, mit der ein Leuchtmittel-Konverter (zweite Konverterstufe, üblicherweise DC/DC) 10 versorgt wird, der seinerseits eine Konstantstrom-Quelle zum Betreiben des LED-Moduls 12 bildet. Der LED-Modul 12 besteht aus einer Mehrzahl von Leuchtmittel-LEDs, die durch Parallel- und/oder Serienschaltung zusammengefasst sind.

Die Gleichspannungsquelle 1 enthält einen Gleichrichter 3, beispielsweise einen Brückengleichrichter, der die Netzspannung gleichrichtet. Die gleichgerichtete Netzspannung wird dann in einem Spannungswandler 4 in ihrem Spannungswert auf etwa 12 bis 24 V erniedrigt. Der Spannungswandler ist vorzugsweise eine von eienr Steuereinheit aktiv getaktete Schaltung wie bspw. ein Schaltregler, wie beispielsweise ein Flyback-Konverter oder ein Tiefsetzsteller.

Der von dem auf die Gleichspannungsquelle 1 folgenden Leuchtmittel-Konverter aufgenommene Strom wird mittels eines Strommessteils 5 gemessen und als Messwert I an einen Komparator 8 gemeldet. Dem Komparator wird außerdem von einem Grenzwert-Geber 7 ein oberer Grenzwert I_{G} für den Strom I zur Verfügung gestellt. Der Komparator 8 vergleicht die beiden ihm zugeführten Stromwerte I und I_{G}. Wenn der Strom I den oberen Grenzwert I_{G} übersteigt, betätigt der Komparator 8 einen Schalterteil 2, der die Gleichspannungsquelle 1 dann unverzüglich vom Netz trennt. Alternativ dazu ist es natürlich auch möglich, die Verbindung zwischen der Gleichspannungsquelle 1 und dem Leuchtmittel-Konverter 10 zu trennen.
Die erste Konverterstufe weist die Gleichspannungsquelle, die Steuereinheit (bspw. integrierte Schaltung wie ein ASIC, µC oder Hybrid davon) sowie die Auswerteschaltung für den Messwert I auf.
In **Figur 2** ist gezeigt, dass der Einschaltstrom infolge der durch die in dem Kasten für den Leuchtmittel-Konverter 10 angedeuteten hohen Eingangs-Kapazität zunächst steil ansteigt und nach einem Überschwinger wieder abfällt. In dieser Darstellung ist auch gezeigt, wie sich der Einschaltstrom bei einem normalen Konverter für ein low power LED-Modul verhält (flach ansteigender Verlauf ohne Überschwinger) und wie der Einschaltstrom aussieht, wenn der auf die Gleichspannungsquelle 1 folgende Konverter 10 am Eingang einen Kurzschluss zeigt. Der obere Grenzwert I_{G} für den Strom I ist nun so gewählt, dass er niedriger als der Spitzenwert des Einschaltstromes ist. Der Einschaltstrom würde demnach ebenso zum Abschalten des Systems (ausgelöst bspw. durch die Steuereinheit der ersten Konverterstufe) führen, wie der Kurzschluss-Strom.

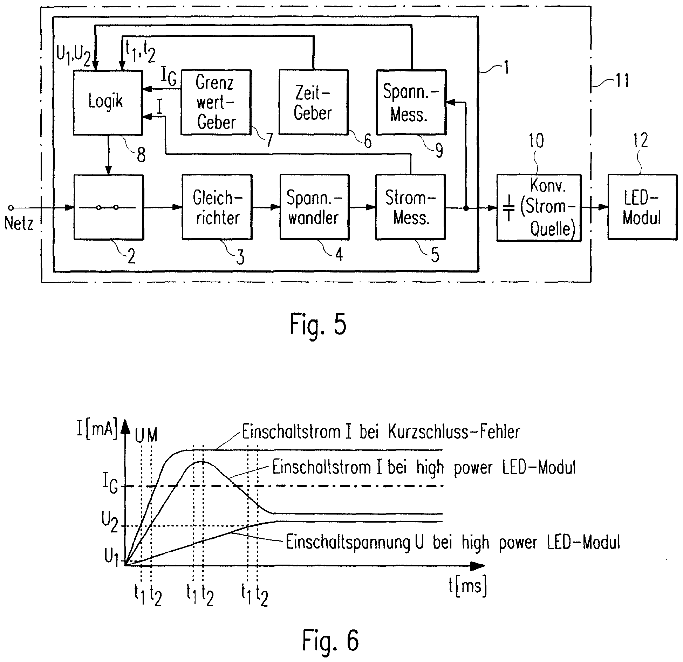

Die in den folgenden 4 Absätzen (von "Um dies zu verhindern" bis zum "keine Abschaltung bewirken") aufgeführten Ausführungen sind Beispiele um die Erfindung verständlicher zu machen, stellen aber keine erfindungsgemäßen Ausführungsformen dar. Die Ausführungsform die Anhand den Figuren 5 und 6 erläutert wird, stellt eine erfindungsgemäße Ausführungsform dar.

Um dies zu verhindern, wird nun währen einer Einschaltphase der Abschaltmechanismus aktiviert. Dies ist in **Figur 1** symbolisch dadurch angedeutet, dass ein Zeitgeber 6 den Komparator 8 mit zwei Zeitsignalen t₀ und t₂ versorgt, die den Anfang und das Ende der Einschaltphase signalisieren. Innerhalb der durch diese beiden Zeitsignale vorgegebenen Einschaltphase wird nun der Abschaltmechanismus deaktiviert.

In dem Blockschaltbild nach **Figur 3** sind Schaltungsteile, die gegenüber den entsprechenden Schaltungsteilen in **Figur 1** unverändert sind, mit gleichen Bezugsziffern bezeichnet. Es werden daher nur die Abweichungen erklärt.

Anders ist in **Figur 3****,** dass der Grenzwertgeber 7 hier zwei obere Grenzwerte für den Strom I ausgibt, und zwar einen zunächst während einer Einschaltphase angehobenen oberen Grenzwert I_{G1} und einen nach der Einschaltphase wieder abgesenkten zweiten Grenzwert I_{G2}. Der Zeitgeber 6 meldet in diesem Fall die zwei Zeitsignale t0 und t2 an den Grenzwertgeber 7.
Wie man der **Figur 4** entnehmen kann, liegt der erhöhte obere Grenzwert I_{G1} für den Strom I in der Einschaltphase oberhalb des Spitzenwertes des überschwingenden Einschaltstromes, aber unterhalb des Kurzschluss-Stromes. Dadurch kann die Abschaltung durch die Steuereinheit der ersten Konverterstufe bei Kurzschluss bereits währen der Einschaltphase erfolgen. Der überschwingende Einschaltstrom kann dagegen keine Abschaltung bewirken.

In dem Blockschaltbild gemäß **Figur 5** wird neben dem Strom erfindungsgemäß zusätzlich noch die Spannung am Ausgang der Gleichspannungsquelle 1 bzw. am Eingang des auf diese folgenden Leuchtmittel-Konverters gemessen, und zwar mit einem Spannungs-Messteil 9. Dieses meldet dauernd die gemessenen Spannungswerte an ein Logik-Schaltungsteil 8 (das Teil der genanntne Steuereinheit der ersten Konverterstufe sein kann). Dem Logik-Schaltungsteil 8 werden von dem Zeitgeber 6 wiederholt zwei aufeinander folgende Mess-Zeitpunkte t₁ und t₂ vorgegeben, zu denen der Logik-Schaltungsteil 8 die augenblicklichen Spannungsmesswerte U₁ und U₂ auswertet. Ferner werden dem Logik-Schaltungsteil 8 - wie bisher - von dem Strommess-Schaltungsteil 5 die Messwerte für den von dem Leuchtmittel-Konverter 10 aufgenommenen Strom I gemeldet. Der Logik-Schaltungsteil vergleicht - wie bisher - den gemessenen Strom mit dem ihm von dem Grenzwert-Geber zugeführten oberen Grenzwert I_{G} und veranlasst eine Systemabschaltung, wenn die gemessene Strom I höher als der obere Grenzwert I_{G} ist und wenn eine weitere Bedingung erfüllt ist, die nachfolgend anhand von **Figur 6** erläutert wird.
Der Logik-Schaltungsteil 8 wertet gemäß **Figur 6** die zu den wiederholt von dem Zeitgeber 6 ausgegebenen Mess-Zeitpunkten t₁ und t₂ gemessenen Spannungswerte U₁ und U₂ aus und vergleicht sie miteinander. Die Mess-Zeitpunkte t₁ und t₂ folgen jeweils kurz aufeinander. Die weitere Bedingung für die Auslösung eines Abschaltvorganges ist erfindungsgemäß die, dass die Abschaltung nicht erfolgen darf, solange der jeweils zweite Spannungswert U₂ größer ist als der jeweils kurz davor gemessenen erste Spannungswert U₁. Dieser Bedingung liegt die Erkenntnis zugrunde, dass die Spannung an der Eingangs-Kapazität des Leuchtmittel-Konverters 10 bei normalem Verlauf relativ flach linear ansteigt (ohne Überschwinger), so dass die Einschaltphase als beendet angesehen werden kann, wenn die Spannung am Eingang des Leuchtmittel-Konverters 10 ihren Maximalwert erreicht hat und konstant bleibt. Wie man erkennt, hat der Eingangsstrom zu diesem Zeitpunkt seinen Spitzenwert überschritten und ist wieder unter den oberen Grenzwert I_{G} gefallen. Ein Kurzschluss-Strom kann dagegen jederzeit, d. h. auch während der Einschaltphase eine Abschaltung bewirken.

## Patentansprüche

1. Verfahren zum Betreiben wenigstens eines Leuchtmittels (12), insbesondere LED oder OLED, bei dem das Leuchtmittel (12) ausgehend von einer Gleichspannung (1) unter Zwischenschaltung eines Konverters (10) mit elektrischer Betriebsenergie versorgt wird,
bei dem der von dem Konverter (10) aufgenommene Strom (I) gemessen und mit einem Grenzwert (I_{G}) verglichen wird,
bei ein Überstrom-Schutzmodus aktiviert wird, bspw. indem die Spannungsversorgung des Konverters (10) getrennt oder abgeschaltet wird, wenn der von dem Konverter (10) aufgenommene Strom (I) den Grenzwert (I_{G}) überschreitet,
wobei,
die Aktivierung des Überstrom-Schutzmodus während einer festen oder adaptiv festgelegten Zeitdauer der Einschaltphase anders geregelt bzw. gesteuert wird als während einer folgenden Betriebsphase,
**dadurch gekennzeichnet,**
**dass** ferner die Gleichspannung (1) wiederholt an zwei aufeinander folgenden Mess-Zeitpunkten (t₁, t₂) gemessen wird und die beiden Messwerte (U₁, U₂) miteinander verglichen werden, und
der Überstrom-Schutzmodus nicht aktiviert wird, solange der Spannungs-Messwert (U₂) zu dem jeweils zweiten Messzeitpunkt (t₂) größer ist als der Spannungs-Messwert (U₁) zu dem jeweils ersten Messzeitpunkt (t₁).

2. Verfahren nach Anspruch 2,
wobei das Aktivieren des Überstrom-Schutzmodus während einer festen oder adaptiv festgelegten Zeitdauer nach dem Einschalten der Spannungsversorgung des Konverters (10) gesperrt wird.

3. Verfahren nach Anspruch 1 oder 2,
bei dem der Grenzwert während einer festen oder adaptiv festgelegten Zeitdauer nach dem Einschalten der Spannungsversorgung des Konverters erhöht (I_{G2}) und danach wieder abgesenkt (I_{G1}) wird.

4. Verfahren nach einem der vorherstehenden Ansprüche,
bei dem die Gleichspannung (1) durch einen an eine Wechselspannung anzuschließenden Gleichrichter (3) und einen diesem nachgeschalteten Spannungswandler (4) erzeugt wird, der die von dem Gleichrichter (3) gelieferte gleichgerichtete Wechselspannung in eine Gleichspannung mit einem anderen Spannungswert umwandelt.

5. Verfahren nach Anspruch 4,
bei dem der Spannungswandler (4) ein Flyback-Konverter oder eine Tiefsetzsteller ist.

6. Verfahren nach einem der vorherstehenden Ansprüche,
bei dem das Leuchtmittel (12) eine LED oder mehrere zu einem Modul zusammengefasste LEDs ist/sind, und
bei dem der Konverter (10) für das Leuchtmittel (12) eine Konstantstromquelle bildet.

7. Steuerschaltung, insbesondere IC wie bspw. ein ASIC oder ein Mikrokontroller, die zur Ausführung eines Verfahrens nach einem der vorhergehenden Ansprüche ausgelegt ist.

8. Betriebsschaltung (11) für wenigstens ein Leuchtmittel (12), insbesondere LED oder OLED, mit einer Gleichspannungsquelle (1),
einem dieser nachgeschalteten Konverter (10), der das Leuchtmittel (12) mit elektrischer Betriebsenergie versorgt,
Messmitteln (5) für den von dem Konverter aufgenommenen Strom (I),
Vergleichsmitteln (8), die den Strom-Messwert (I) mit einem Grenzwert (I_{G}) vergleichen,
Schaltmitteln (2), welche die Betriebsschaltung selektiv in einen Überstrom-Schutzmodus verbringen, indem sie bspw. die Gleichspannungsquelle (1) von dem Konverter (10) trennen oder die Gleichspannungsquelle (1) abschalten, wenn der von dem Konverter (10) aufgenommene Strom (I) den Grenzwert (I_{G}) überschreitet,
wobei die Schaltmittel (2) dazu ausgebildet sind, das Verbringen in den Überstrom-Schutzmodus während einer festen oder adaptiv festgelegten Zeitdauer der Einschaltphase anders zu regeln bzw. steuern als während einer folgenden Betriebsphase,
**dadurch gekennzeichnet, dass** die Betriebsschaltung (11) weitere Messmittel (9) aufweist, mit denen die Ausgangsspannung (U₁, U₂) der Gleichspannungsquelle (1) wiederholt an zwei aufeinander folgenden Mess-Zeitpunkten (t₁, t₂) gemessen werden, und zeitgesteuerte Stellmittel (6, 7, 8) aufweist, welche die Schaltmittel (2) deaktivieren, solange der Spannungs-Messwert (U₂) zu dem jeweils zweiten Messzeitpunkt (t₂) größer ist als der Spannungs-Messwert (U₁) zu dem jeweils ersten Messzeitpunkt (t₁) .

9. Betriebsschaltung nach Anspruch 8,
aufweisend zeitgesteuerte Stellmittel (6, 7, 8), welche die Schaltmittel (2) während festen oder adaptiv festgelegten Zeitdauer nach dem Einschalten des Konverters deaktivieren.

10. Betriebsschaltung (11) nach Anspruch 8 oder 9,
aufweisend zeitgesteuerte Stellmittel (6, 7, 8), welche den Grenzwert während einer festen oder adaptiv festgelegten Zeitdauer nach dem Einschalten des Konverters anheben (I_{G2}) und danach wieder absenken (I_{G1}) .

11. Betriebsschaltung (11) für ein Leuchtmittel (12) nach einem der Ansprüche 8 bis 10,
wobei die Gleichspannungsquelle (1) einen an das Netz anzuschließenden Gleichrichter (3) und einen diesem nachgeschalteten Schaltregler (4) aufweist, der die von dem Gleichrichter (3) gelieferte Gleichspannung in eine Gleichspannung mit einem anderen Spannungswert umwandelt.

12. Betriebsschaltung (11) für ein Leuchtmittel (12) nach Anspruch 11,
wobei der Schaltregler (4) ein Flyback-Konverter oder ein Tiefsetzsteller ist.

13. Betriebsschaltung (11) für ein Leuchtmittel (12) nach einem der Ansprüche 8 bis 12,
wobei das Leuchtmittel (12) eine LED oder mehrere zu einem Modul zusammengefasste LEDs ist/sind, und
bei dem der Konverter (10) für das Leuchtmittel (12) eine Konstantstromquelle bildet.

14. LED- oder OLED-Leuchte, aufweisend eine Betriebsschaltung nach einem der Ansprüche 8 bis 13.

## Claims

1. Method for operating at least one lighting means (12), in particular LED or OLED, in which the lighting means (12) is supplied with electrical operating power on the basis of a DC voltage (1) with the interposition of a converter (10),
in which the current (I) drawn by the converter (10) is measured and compared with a limit value (I_{G}),
in which an overcurrent protection mode is activated, e.g. by disconnecting or switching off the voltage supply of the converter (10), when the current (I) drawn by the converter (10) exceeds the limit value (I_{G}),
wherein
the activation of the overcurrent protection mode is regulated or controlled differently during a fixed or adaptively defined time period of the switch-on phase than during a subsequent operating phase,
**characterized in that**
the DC voltage (1) is further repeatedly measured at two successive measurement times (t₁, t₂) and the two measured values (U₁, U₂) are compared with one another, and
the overcurrent protection mode is not activated as long as the voltage measured value (U₂) at the respective second measurement time (t₂) is greater than the voltage measured value (U₁) at the respective first measurement time (t₁).

2. Method according to Claim 2,
wherein the activation of the overcurrent protection mode is blocked during a fixed or adaptively defined time period after the voltage supply of the converter (10) has been switched on.

3. Method according to Claim 1 or 2,
in which the limit value is increased (I_{G2}) during a fixed or adaptively defined time period after the power supply of the converter has been switched on and then lowered (I_{G1}) again.

4. Method according to any one of the preceding Claims, in which the DC voltage (1) is generated by a rectifier (3) to be connected to an AC voltage and a voltage transformer (4) connected downstream of said rectifier, which changes the rectified AC voltage supplied by the rectifier (3) into a DC voltage having a different voltage value.

5. Method according to Claim 4,
in which the voltage transformer (4) is a flyback converter or a buck converter.

6. Method according to any one of the preceding Claims,
in which an LED or a plurality of LEDs consolidated to form one module is/are the lighting means (12), and
in which the converter (10) constitutes a constant power source for the lighting means (12).

7. Control circuit, in particular an IC such as an ASIC or a microcontroller, for example, which is designed to carry out a method according to any one of the preceding Claims.

8. Operating circuit (11) for at least one lighting means (12), in particular LED or OLED, having a DC voltage source (1),
a converter (10) connected downstream of said operating circuit, which supplies the lighting means (12) with electrical operating power,
measuring means (5) for the current (I) drawn by the converter,
comparison means (8), which compare the current measured value (I) with a limit value (I_{G}),
switching means (2), which selectively move the operating circuit into an overcurrent protection mode, for example by disconnecting the DC voltage source (1) from the converter (10) or switching off the DC voltage source (1), when the current (I) drawn by the converter (10) exceeds the limit value (I_{G}),
wherein the switching means (2) are configured to regulate or control the movement into overcurrent protection mode differently during a fixed or adaptively defined time period of the switch-on phase than during a subsequent operating phase,
**characterized in that** the operating circuit (I) comprises further measuring means (9), by means of which the output voltage (U₁, U₂) of the DC voltage source (1) is repeatedly measured at two successive measurement times (t₁, t₂), and
comprises time-controlled actuating means (6, 7, 8), which deactivate the switching means (2) as long as the voltage measured value (U₂) at the respective second measurement time (t₂) is greater than the voltage measured value (U₁) at the respective first measurement time (t₁).

9. Operating circuit according to Claim 8,
comprising time-controlled actuating means (6, 7, 8), which deactivate the switching means (2) during a fixed or adaptively defined time period after the converter has been switched on.

10. Operating circuit (11) according to Claim 8 or 9,
comprising time-controlled actuating means (6, 7, 8), which raise (I_{G2}) the limit value during a fixed or adaptively defined time period after the converter has been switched on and then lower (I_{G1}) it again.

11. Operating circuit (11) for a lighting means (12) according to any one of Claims 8 to 10,
wherein the DC voltage source (1) comprises a rectifier (3) to be connected to the grid and a switching regulator (4) connected downstream of said rectifier, which changes the DC voltage supplied by the rectifier (3) into a DC voltage having a different voltage value.

12. Operating circuit (11) for a lighting means (12) according to Claim 11,
wherein the switching regulator (4) is a flyback converter or a buck converter.

13. Operating circuit (11) for a lighting means (12) according to any one of Claims 8 to 12,
wherein an LED or a plurality of LEDs consolidated to form one module is/are the lighting means (12), and
in which the converter (10) constitutes a constant power source for the lighting means (12).

14. LED or OLED lamp, comprising an operating circuit according to any one of Claims 8 to 13.

## Revendications

1. Procédé pour faire fonctionner au moins un moyen d'éclairage (12), notamment à LED ou à OLED, chez lequel le moyen d'éclairage (12) est alimenté d'énergie électrique par une tension continue (1), moyennant l'intercalage d'un convertisseur (10),
chez lequel le courant (I) pris en charge par le convertisseur (10) est mesuré et comparé à une valeur de seuil (I_{G}),
est activé lors d'un mode de protection contre les surtensions, par exemple, en ce que l'alimentation en tension du convertisseur (10) est séparée ou coupée lorsque le courant (I) pris en charge par le convertisseur (10) dépasse la valeur de seuil (I_{G}),
où
l'activation du mode de protection contre les surtensions est réglé, respectivement commandé pendant un intervalle de temps de la phase d'activation réglé de manière fixe ou adaptée de manière différente que pendant une phase de fonctionnement suivante,
**caractérisé en ce**
**qu'**en outre, la tension continue (1) est de nouveau mesurée à deux instants de mesure (t₁, t₂) se succédant et les deux valeurs de mesure U₁, U₂) sont comparées l'une à l'autre, et
le mode de protection contre les surtensions n'est pas activé tant que la valeur de mesure de la tension (U₂) pour respectivement le deuxième instant de mesure (t₂) est supérieure à la valeur de mesure de la tension (U₁) pour respectivement le premier instant de mesure (t₁).

2. Procédé selon la revendication 2,
dans lequel l'activation du mode de protection contre les surtensions est empêchée pendant un intervalle de temps défini de manière fixe ou adaptée après l'activation de l'alimentation en tension du convertisseur (10).

3. Procédé selon la revendication 1 ou 2,
chez lequel la valeur limite pendant un intervalle de temps défini de manière fixe ou adaptée après l'activation de l'alimentation en tension des convertisseurs (I_{G2}) s'élève et diminue ensuite de nouveau (I_{G1}).

4. Procédé selon l'une des revendications précédentes, chez lequel la tension continue (1) est générée par un redresseur (3) à raccorder à la tension alternative et est générée dans ce convertisseur de tension (4) branché après celui-ci, qui convertit la tension alternative redressée délivrée par le redresseur (3) en une tension continue avec une autre valeur de tension.

5. Procédé selon la revendication 4,
chez lequel le convertisseur de tension (4) est un convertisseur Flyback ou un réducteur de voltage.

6. Procédé selon l'une des revendications précédentes,
chez lequel le moyen d'éclairage (12) est une LED ou plusieurs LED rassemblées en un module, et
chez lequel le convertisseur (10) forme une source de courant constant pour le moyen d'éclairage (12).

7. Circuit de commande, en particulier dispositif de commande IC, comme par exemple, un dispositif ASIC ou un micro-dispositif de commande, qui est conçu pour l'exécution d'un procédé selon l'une des revendications précédentes.

8. Circuit de fonctionnement (11) pour au moins un moyen d'éclairage (12), notamment, une LED ou OLED, avec une source de tension continue (1),
un convertisseur (10) branché derrière celui-ci, qui alimente le moyen d'éclairage (12) avec de l'énergie électrique,
des systèmes de mesure (5) pour le courant (I) pris en charge par le convertisseur,
des systèmes de comparaison (8), qui comparent la valeur de mesure du courant (I) avec une valeur de seuil (I_{G}), des systèmes de commutation (2), lesquels mettent le circuit de fonctionnement dans un mode de protection contre les surtensions de manière sélective, par exemple, en ce qu'ils séparent la source de tension continue (1) du convertisseur (10) ou coupent la source de tension continue (1) lorsque le courant (I) pris en charge par le convertisseur (10) dépasse la valeur de seuil (I_{G}),
où les systèmes de commutation (2) sont conçus pour régler autrement, respectivement, commander, le séjour dans le mode de protection contre les surtensions pendant un intervalle de temps défini de manière fixe ou adaptée de la phase d'activation que pendant une phase de fonctionnement suivante,
**caractérisé en ce que** le circuit de fonctionnement (I) présente d'autres systèmes de mesure (9), avec lesquels les tensions de départ (U₁, U₂) de la source de tension continue (1) sont mesurées de nouveau à deux instants de mesure se succédant (t₁, t₂), et
présente des systèmes de réglages commandés dans le temps (6, 7, 8), lesquels désactivent les systèmes de commutation (2) tant que la valeur de mesure de la tension (U₂) au respectivement deuxième instant de mesure (t₂) est supérieure à la valeur de mesure de la tension (U₁) au respectivement premier instant de mesure (t₁).

9. Circuit de fonctionnement selon la revendication 8,
présentant des systèmes de réglages commandés dans le temps (6, 7, 8), lesquels désactivent les systèmes de commutation (2) pendant un intervalle de temps défini de manière fixe ou adaptée après l'activation du convertisseur.

10. Circuit de fonctionnement (11) selon la revendication 8 ou la revendication 9,
présentant des systèmes de réglages commandés dans le temps (6, 7, 8), lesquels maintiennent (I_{G2}) la valeur de seuil pendant un intervalle de temps défini de manière fixe ou adaptée après l'activation du convertisseur et la diminuent de nouveau (I_{G1}) après.

11. Circuit de fonctionnement (11) pour un moyen d'éclairage (12) selon l'une des revendications 8 à 10,
dans lequel la source de tension continue (1) présente un redresseur (3) se raccordant au réseau et un régulateur (4) branché après celui-ci, qui convertit la tension continue délivrée par le redresseur (3) en une tension continue avec une autre valeur de tension.

12. Circuit de fonctionnement (11) pour un moyen d'éclairage (12) selon la revendication 11,
dans lequel le régulateur (4) est un convertisseur Flyback ou un réducteur de voltage.

13. Circuit de fonctionnement (11) pour un moyen d'éclairage (12) selon l'une des revendications 8 à 12,
dans lequel le moyen d'éclairage (12) est une LED ou plusieurs LED rassemblées en un module, et
chez lequel le convertisseur (10) forme une source de courant constant pour le moyen d'éclairage (12).

14. Luminaire LED ou OLED, présentant un circuit de fonctionnement selon l'une des revendications 8 à 13.
